# EUROPÄISCHE PATENTSCHRIFT

(11) **EP 3 987 373 B1**
(45) Veröffentlichungstag und Bekanntmachung des Hinweises auf die Patenterteilung: **21.06.2023**
(21) Anmeldenummer: 20761519.6
(22) Anmeldetag: 04.08.2020
(51) Int. Cl.: G05B 23/02

(54) **EFFIZIENTE FEHLERANALYSE DURCH SIMULIERTEN FEHLER IN EINEM DIGITALEN ZWILLING**
EFFICIENT ERROR ANALYSIS BY MEANS OF SIMULATED ERRORS IN A DIGITAL TWIN
ANALYSE EFFICACE D'ERREURS AU MOYEN DES ERREURS SIMULÉES DANS UN DOUBLE NUMÉRIQUE

(30) Priorität: 28.08.2019 EP 19194048
(43) Veröffentlichungstag der Anmeldung: 27.04.2022
(73) Patentinhaber: Siemens Aktiengesellschaft, 80333 München (DE)
(72) Erfinder: BAUDISCH, Thomas, 86938 Schondorf am Ammersee (DE); METZNER, Maximilian, 96047 Bamberg (DE); MONTRONE, Francesco, 85521 Riemerling (DE); PESCHKE, Jörn, 90489 Nürnberg (DE); ROSSGODERER, Ulrich, 81539 München (DE)
(74) Vertreter: Siemens Patent Attorneys
(86) Internationale Anmeldenummer: PCT/EP2020/071896
(87) Internationale Veröffentlichungsnummer: WO 2021/037498

(56) Entgegenhaltungen:
- CN-A- 109 779 894
- US-A1- 2016 258 845
- SLEUTERS JACK ET AL: "A Digital Twin Method for Automated Behavior Analysis of Large-Scale Distributed IoT Systems", 2019 14TH ANNUAL CONFERENCE SYSTEM OF SYSTEMS ENGINEERING (SOSE), IEEE, 19. Mai 2019 (2019-05-19), Seiten 7-12, XP033573421, DOI: 10.1109/SYSOSE.2019.8753845

## Beschreibung

Die vorliegende Erfindung betrifft ein Verfahren und eine Vorrichtung zum Identifizieren von Fehlerursachen bei automatisierten Anlagen, sowie eine automatisierte Anlage umfassend die Vorrichtung zum Identifizieren von Fehlerursachen bei automatisierten Anlagen.

### Stand der Technik

Die Automatisierungstechnik betrifft insbesondere den Anlagenbau im Bereich des Maschinenbaus und der Elektrotechnik. Sie wird eingesetzt, um technische Vorgänge in Maschinen, Anlagen oder technischen Systemen zu automatisieren und somit automatisierte Anlage zu schaffen. Dazu kommen verschiedenen Aktoren in einer automatisierten Anlage zum Einsatz, die einen Prozess (z. B. Fertigungsprozess oder Verfahren) durchführen. Die Aktoren werden von einer Steuerung der automatisierten Anlage gesteuert, wobei die Steuerung durch Sensoren Informationen über den Prozess bzw. den Anlagenzustand erhält.

Der Automatisierungsgrad einer automatisierten Anlage ist umso höher, je unabhängiger die automatisierte Anlage von menschlichen Eingriffen ist. Die Automatisierung dient neben der Entlastung des Menschen von gefährlichen, anstrengenden oder Routine-Tätigkeiten der Qualitätsverbesserung und steigert die Leistungsfähigkeit der automatisierten Anlage. Zudem können durch Automatisierung Personalkosten gesenkt werden. Dabei werden menschliche Tätigkeiten vorwiegend auf die Beseitigung von Störungen, den Materialnachschub, den Fertigteilabtransport, die Wartung und ähnliche Arbeiten reduziert.

Entwurf, Implementierung von Automatisierungsfunktionen und Inbetriebnahme von automatisierten Anlagen sind stark methodenorientiert. Entwickelte Methoden und Lösungen sind meist das Ergebnis einer (abstrahierenden) Modellbetrachtung realer physikalischer Systeme (automatisierte Anlagen). Dabei werden die physikalischen Systeme häufig mittels eines rechnergestützten virtuellen Abbilds oder Modells, eines sogenannten digitalen Zwillings, modelliert. Auf der Grundlage dieser digitalen Zwillinge können dann wissensbasierte Methoden zum Entwurf und zur Inbetriebnahme der verschiedenen Automatisierungsfunktionen entwickelt werden. Mit wissensbasierten Ansätzen entstehen dann zum Beispiel automatisierte Anlagen, die modellgestützte Regelungen und Steuerungen enthalten.

In automatisierten Anlagen besteht das Problem, dass auftretende Fehler und andere unvorhergesehene Anlagenzustände oftmals nicht eindeutig sind und deren (Fehler-)Ursachen nicht nachvollziehbar sind. Dies kann beispielsweise durch eine zeitliche und örtliche Fehlerfortpflanzung bedingt sein. Dies macht es schwierig, Fehlerursachen zu erkennen bzw. einzugrenzen, da die den Anlagenzustand/Fehler auslösende Ursache zeitlich zurückliegen kann und im resultierenden Anlagenzustand/Fehler nicht mehr erkennbar ist.

Digitale Zwillinge von automatisierten Anlagen können dergestalt erweitert werden, dass mögliches Fehlverhalten modelliert wird und das Verhalten der automatisierten Anlage im Fehlerfall inklusive weitergehender Auswirkungen simuliert wird. Dabei existiert eine Vielzahl möglicher Arten und Kombinationen von Fehlern von Elementen der automatisierten Anlage, die zusätzlich durch unterschiedliches Anlagenverhalten im Produktivbetrieb (z. B. Art und Position von Werkstücken im System) erhöht wird. Die daraus resultierende kombinatorische Explosion ermöglicht es im Allgemeinen nicht, jeden möglichen Anlagenzustand und Fehler im Voraus zu simulieren und zu bestimmen.

Die Lösung durch etablierte Verfahren wie "Failure Mode and Effect Analysis (FMEA)" (hier insbesondere System- oder Prozess-FMEA) oder Modelle zur "Root Cause Analysis (RCA)" erfordern zusätzlichen Analyse- und Modellierungsaufwand und ermöglichen das Identifizieren von Fehlern nur im Rahmen der Modellierung und für bestimmte Zusammenhänge. Eine umfassende Abbildung erfordert einen zu hohen Aufwand und stellt dennoch nicht sicher, dass bisher unbekannte Anlagenzustände bzw. Fehler identifiziert werden können.

Die Druckschrift US 2016/0258845A1 - Mankovskii et al. "SELF-LEARNING SIMULATION ENVIRONMENTS" zeigt die Optimierung einer virtuellen Repräsentation und die Analyse einer Fehlerursache anhand der Variierung von Eingangsparametern für die virtuelle Repräsentation.

### Zusammenfassung der Erfindung

Die Aufgabe der vorliegenden Erfindung ist es dieses Problem zu Lösen oder wenigstens zu lindern, indem ein Verfahren zum Identifizieren von Fehlerursachen bei automatisierten Anlagen gemäß dem unabhängigen Anspruch 1 und eine Vorrichtung zum Identifizieren von Fehlerursachen bei automatisierten Anlagen, sowie eine entsprechende automatisierte Anlage gemäß den weiteren unabhängigen Ansprüchen bereitgestellt werden. Vorteilhafte Ausgestaltungen und Weiterbildungen sind Gegenstand der jeweils abhängigen Ansprüche.

Gemäß einem ersten Aspekt der vorliegenden Erfindung umfasst ein Verfahren zum Identifizieren von Fehlerursachen bei automatisierten Anlagen die Schritte:
a) Kontinuierliches Erfassen eines realen Anlagenzustands einer automatisierten Anlage. Dabei umfasst der reale Anlagenzustand wenigstens eine physikalische Größe der automatisierten Anlage.
b) Kontinuierliches Überprüfen, ob ein Fehler in den erfassten realen Anlagenzuständen vorliegt und, falls ein Fehler in den erfassten realen Anlagenzuständen vorliegt, Ermitteln eines jüngsten fehlerfreien Anlagenzustands in den erfassten realen Anlagenzuständen und eines Fehlerzeitpunkts.
c) Initialisieren eines digitalen Zwillings der automatisierten Anlage mit dem ermittelten jüngsten fehlerfreien Anlagenzustand.
d) Simulieren des Anlagenzustands mittels des initialisierten digitalen Zwillings bis zu dem ermittelten Fehlerzeitpunkt. dabei wird wenigstens ein Element des digitalen Zwillings als fehlerhaft angenommen.
e) Vergleichen des simulierten Anlagenzustands im ermittelten Fehlerzeitpunkt mit dem realen Anlagenzustand im Fehlerzeitpunkt und
   e1) Identifizieren wenigstens eines fehlerhaften Elements der automatisierten Anlage als Fehlerursache in der automatisierten Anlage basierend auf dem wenigstens einen als fehlerhaft angenommenen Element des digitalen Zwillings, falls der simulierte Anlagenzustand im Fehlerzeitpunkt mit dem realen Anlagenzustand im Fehlerzeitpunkt übereinstimmt oder
   e2) wiederholen der Schritte c) bis e), falls der simulierte Anlagenzustand im Fehlerzeitpunkt mit dem realen Anlagenzustand im Fehlerzeitpunkt nicht übereinstimmt, wobei in Schritt d) wenigstens ein anderes Element des digitalen Zwillings als fehlerhaft angenommen wird.

Gemäß einem zweiten Aspekt der vorliegenden Erfindung umfasst eine Vorrichtung zum Identifizieren von Fehlerursachen bei automatisierten Anlagen wenigstens einen Sensor und eine Steuereinheit. Der wenigstens eine Sensor ist ausgebildet, wenigstens eine physikalische Größe der automatisierten Anlage kontinuierlich zu erfassen. Die Steuereinheit ist mit dem wenigstens einen Sensor kommunikativ verbunden. Die Steuereinheit ist ausgebildet, das Verfahren gemäß dem ersten Aspekt der vorliegenden Erfindung auszuführen. Dazu ist die Steuereinheit ausgestaltet und eingerichtet, einen realen Anlagenzustand einer automatisierten Anlage kontinuierlich zu erfassen. Dabei umfasst der reale Anlagenzustand die von dem wenigstens einen Sensor erfasste wenigstens eine physikalische Größe. Weiter ist die Steuereinheit ausgestaltet und eingerichtet, kontinuierlich zu überprüfen, ob ein Fehler in den erfassten realen Anlagenzuständen vorliegt und, falls ein Fehler in den erfassten realen Anlagenzuständen vorliegt, einen jüngsten fehlerfreien Anlagenzustand in den erfassten realen Anlagenzuständen und einen Fehlerzeitpunkt zu ermitteln. Ferner ist die Steuereinheit ausgestaltet und eingerichtet, einen digitalen Zwilling der automatisierten Anlage mit dem ermittelten jüngsten fehlerfreien Anlagenzustand zu initialisieren. Außerdem ist die Steuereinheit ausgestaltet und eingerichtet, den Anlagenzustand mittels des initialisierten digitalen Zwillings bis zu dem ermittelten Fehlerzeitpunkt zu simulieren. Dabei wird wenigstens ein Element des digitalen Zwillings als fehlerhaft angenommen. Schließlich ist die Steuereinheit ausgestaltet und eingerichtet, den simulierten Anlagenzustand im ermittelten Fehlerzeitpunkt mit dem realen Anlagenzustand im Fehlerzeitpunkt zu vergleichen und wenigstens ein fehlerhaftes Element der automatisierten Anlage als Fehlerursache in der automatisierten Anlage basierend auf dem wenigstens einen als fehlerhaft angenommenen Element des digitalen Zwillings zu identifizieren, falls der simulierte Anlagenzustand im Fehlerzeitpunkt mit dem realen Anlagenzustand im Fehlerzeitpunkt übereinstimmt oder erneut den digitalen Zwilling zu initialisieren, den Anlagenzustand zu simulieren und den simulierten Anlagenzustand mit dem realen Anlagenzustand zu vergleichen, falls der simulierte Anlagenzustand im Fehlerzeitpunkt mit dem realen Anlagenzustand im Fehlerzeitpunkt nicht übereinstimmt, wobei wenigstens ein anderes Element des digitalen Zwillings als fehlerhaft angenommen wird.

Gemäß einem dritten Aspekt der vorliegenden Erfindung umfasst eine automatisierte Anlage die Vorrichtung gemäß dem zweiten Aspekt der vorliegenden Erfindung.

Das Verfahren gemäß dem ersten Aspekt der vorliegenden Erfindung kann von der Vorrichtung gemäß dem zweiten Aspekt der vorliegenden Erfindung ausgeführt werden. Insbesondere kann das Verfahren gemäß dem ersten Aspekt der vorliegenden Erfindung kann von der Steuereinheit der Vorrichtung gemäß dem zweiten Aspekt der vorliegenden Erfindung ausgeführt werden. Die Steuereinheit kann eine Datenverarbeitungseinrichtung wie beispielsweise ein Computer (z. B. Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung), ein cloud-basiertes System, eine Steuereinrichtung der automatisierten Anlage usw. sein.

Im Zusammenhang mit der vorliegenden Erfindung wird der Begriff "kontinuierlich" verstanden als zu vorbestimmten Zeitpunkten und insbesondere als jeweils nach einem vordefinierten Zeitintervall. Ein kontinuierlich ausgeführter Schritt wird demnach verstanden als ein Schritt, der zu bestimmten, vordefinierten Zeitpunkten oder jeweils nach Ablauf eines vordefinierten Zeitintervalls ausgeführt wird.

Die automatisierte Anlage verfügt über einen digitalen Zwilling. Der digitale Zwilling kann während einer Planungsphase bzw. Entwicklungsphase der automatisierten Anlage erstellt worden sein. Der digitale Zwilling ist ein rechnergestütztes, virtuelles Modell der automatisierten Anlage, der die (wichtigsten) Elemente der automatisierten Anlage abbildet und den von der Anlage ausgeführten Prozess (z. B. Fertigungsprozess, Verfahren, usw.) simulieren kann. Das Verhalten der automatisierten Anlage bzw. der Prozess ist mit ausreichender Genauigkeit durch den digitalen Zwilling simulierbar (z.B. mit Hilfe einer Simulation zur virtuellen IBS), sodass die realen Anlagenzustände (z. B. während eines Produktivbetriebs, einer Anlaufphase, eines Abschaltvorgangs usw.) durch die simulierten Anlagenzustände abgebildet werden. Die Simulation bzw. der digitale Zwilling kann auf Basis eines realen Anlagenzustands (Signale bzw. Daten) der realen automatisierten Anlage in den gleichen Zustand wie die reale automatisierte Anlage versetzt werden.

Es erfolgt eine rollende Datenerfassung, wobei der reale Anlagen Zustand kontinuierlich erfasst wird. Dazu wird der reale Anlagenzustand fortlaufend bestimmt und abgespeichert, sodass eine Zeitliche Abfolge erfasster realer Anlagenzustände vorliegt. Dabei wird jeder der Anlagenzustände durch wenigstens eine physikalische Größe charakterisiert. Die wenigstens eine physikalische Größe kann beispielsweise eine Temperatur, ein Druck, eine Kraft, eine Position und/oder eine Geschwindigkeit und/oder eine Beschleunigung eines Elements der automatisierten Anlage oder eines Werkstücks/Prozessguts in der automatisierten Anlage, eine Vibration, eine Drehzahl und dergleichen sein. Die wenigstens eine physikalische Größe kann mittels des wenigstens einen Sensors in bzw. an der automatisierten Anlage kontinuierlich erfasst werden. Der wenigstens eine Sensor kann ein Temperatursensor, ein Kraftsensor, ein Beschleunigungssensor, ein Positionssensor, ein Drucksensor und dergleichen sein. Der wenigstens eine Sensor kann ein Array einzelner Sensoren sein.

Die erfassten realen Anlagenzustände werden kontinuierlich dahingehend überprüft, ob ein Fehler in einem (neuesten) realen Anlagenzustand vorliegt. Dies kann beispielsweise durch einen Vergleich der erfassten realen Anlagenzustände mit hinterlegten bekannten Fehlern erfolgen. Es kann auch durch einen Nutzer (z. B. Techniker, Anlageningenieur usw.) ein Fehler in den erfassten realen Anlagenzuständen identifiziert werden.

Sobald ein Fehler in einem der erfassten realen Anlagenzustände erkannt wird, wird der Zeitpunkt, zudem der fehlerhafte Anlagenzustand aufgetreten ist, ermittelt und gespeichert. Zudem wird ein (vergangener) erfasster realer Anlagenzustand ausgewählt, in dem kein Fehler vorlag. Dabei wird bevorzugt der jüngste reale Anlagenzustand ohne Fehler als der jüngste fehlerfreie Anlagenzustand identifiziert.

Der jüngste fehlerfreie Anlagenzustand kann optional mit dem digitalen Zwilling überprüft werden, indem überprüft wird, ob eine Simulation mit dem digitalen Zwilling ausgehend von dem jüngsten fehlerfreien Anlagenzustand (ohne bewusst hinzugefügte Störung oder Annahme eines fehlerhaften Elements) zu einem simulierten Anlagenzustand, in dem kein Fehler vorliegt, führt. Ist dies nicht der Fall (es liegt ein Fehler vor), so ist der jüngste fehlerfreie Anlagenzustand nicht geeignet, da bereits die Ursache für einen Fehler in dem jüngsten fehlerfreien Anlagenzustand präsent war, und es kann ein anderer (früherer) realer Anlagenzustand als jüngster fehlerfreier Anlagenzustand ausgewählt werden.

Anschließend wird der digitale Zwilling mit dem jüngsten fehlerfreien Anlagenzustand initialisiert, sodass der digitale Zwilling in dem gleichen Zustand wie die fehlerfreie reale automatisierte Anlage, also die automatisierte Anlage vor dem Auftreten des Fehlers ist.

In dem initialisierten digitalen Zwilling wird nunmehr wenigstens ein (virtuelles) Element (z. B. ein virtuelles Abbild eines Aktors) als fehlerhaft bzw. defekt angenommen. Es kann beispielsweise ein kompletter Ausfall des wenigstens einen Elements oder eine Abweichung vom gewünschten Verhalten des wenigstens einen Elements angenommen werden. Der digitale Zwilling wird entsprechend angepasst bzw. manipuliert, sodass das wenigstens eine als fehlerhaft angenommene Element anstelle des entsprechenden wenigstens einen ordnungsgemäß funktionierenden Elements in der Simulation zum Einsatz kommt. Der resultierende simulierte Anlagenzustand basiert demnach auf einem simulierten (virtuell durchgeführten) Prozess des digitalen Zwillings mit dem wenigstens einen als fehlerhaft angenommenen Element bis zum Fehlerzeitpunkt.

Die Simulation mit dem digitalen Zwilling, der das wenigstens eine als fehlerhaft angenommene (virtuelle) Element umfasst, erfolgt von einem Zeitpunkt, zudem der jüngste fehlerfreie Anlagenzustand vorlag, bis zum gespeicherten Fehlerzeitpunkt.

Nachdem die Simulation mit dem manipulierten digitalen Zwilling (umfassend das wenigstens eine als fehlerhaft angenommene Element) erfolgt ist, wird der simulierte Anlagenzustand mit dem realen Anlagenzustand im Fehlerzeitpunkt verglichen. Stimmen der simulierte Anlagenzustand und der reale Anlagenzustand im Fehlerzeitpunkt überein, so kann auf die Fehlerursache geschlossen werden. Dazu kann das wenigstens eine als fehlerhaft angenommene (virtuelle) Element des digitalen Zwillings direkt als das wenigstens eine fehlerhafte (reale) Element der (realen) automatisierten Anlage identifiziert werden, das zu dem Fehler geführt hat. Somit ist die Fehlerursache bekannt und kann entsprechend in der realen automatisierten Anlage behoben werden.

Stimmen der simulierte Anlagenzustand und der reale Anlagenzustand im Fehlerzeitpunkt nicht überein, so wird der digitale Zwilling mit dem jüngsten fehlerfreien Anlagenzustand erneut initialisiert und wenigstens ein anderes Element des digitalen Zwillings als fehlerhaft angenommen. Anschließend wird die Simulation wie zuvor beschrieben erneut ausgeführt und der resultierende neue simulierte Anlagenzustand mit dem realen Anlagenzustand im Fehlerzeitpunkt verglichen. Dies wird iterativ solange wiederholt, bis der resultierende simulierte Anlagenzustand mit dem realen Anlagenzustand im Fehlerzeitpunkt übereinstimmt.

Es können auch Kombinationen von (virtuellen) Elementen des digitalen Zwillings als fehlerhaft angenommen werden.

Zudem kann ein Abbruchkriterium (z. B. alle (virtuellen) Elemente des digitalen Zwillings wurden einmal als fehlerhaft angenommen oder eine vordefinierte Anzahl an Kombinationen von (virtuellen) Elementen des digitalen Zwillings wurden als fehlerhaft angenommen) vorgegeben werden, bei dessen erreichen die Iteration abgebrochen wird.

Kann durch keine Kombination aus als fehlerhaft angenommenen Elementen der real erreichte Anlagen- bzw. Fehlerzustand nachgestellt werden, lässt sich die Ursachensuche in der realen Anlage auf eventuell nicht virtuell abgebildete Prozesse oder Anlagenkomponenten, und/oder nicht mehr nachvollziehbare Zeitintervalle eingrenzen. Sollte somit am Ende des (iterativen) Verfahrens keine Übereinstimmung des simulierten Anlagenzustands mit dem realen Anlagenzustand im Fehlerzeitpunkt vorliegen und somit die Fehlerursache nicht gefunden worden sein, so kann die Fehlersuche an der realen automatisierten Anlage basierend auf den bisherigen Simulationsergebnissen des Verfahrens zumindest eingegrenzt werden.

Die vorliegende Erfindung ermöglicht ohne zusätzlichen Modellierungsaufwand im Entwicklungsprozess oder gar die Simulation aller möglichen Fehlerzustände, eine zuverlässige Identifikation von Fehlerursachen bei automatisierten Anlagen. Das beschriebene Verfahren und die entsprechende Vorrichtung bzw. automatisierte Anlage ermöglichen auf Basis des digitalen Zwillings der automatisierten Anlage eine automatische Analyse von Fehlersituationen. Basierend auf dieser automatischen Analyse kann (im Erfolgsfall) der (oder die) Fehlerursachen identifiziert werden und eine entsprechende Fehlerbehebung bzw. Reparatur der automatisierten Anlage schnell erfolgen. Eine aufwändige und ggf. trotzdem unvollständige vorherige Modellierung des Fehlerverhaltens ist hierzu nicht notwendig.

Gemäß einer Weiterbildung der vorliegenden Erfindung wird in Schritt d) für das wenigstens eine als fehlerhaft angenommene Element eine Fehlerart aus einer Mehrzahl von verschiedenen Fehlerarten angenommen.

Es kann somit nicht nur ein bestimmter Fehler in einem (virtuellen) Element des digitalen Zwillings angenommen werden, sondern es kann aus verschiedenen möglichen Fehlerarten eine Fehlerart ausgewählt werden und der digitale Zwilling entsprechend manipuliert werden.

Sollte der simulierte Analagenzustand des manipulierten digitalen Zwillings mit dem wenigstens einen entsprechend als fehlerhaft angenommenen (virtuellen) Element nicht mit dem realen Anlagenzustand im Fehlerzeitpunkt übereinstimmen, kann auch eine andere Fehlerart anstelle eines anderen (virtuellen) Elements bei der nächsten Iteration in Schritt d) angenommen werden.

Dies ermöglicht eine genauere Simulation der (fehlerhaften) Anlagenzustände mit dem digitalen Zwilling und somit eine zuverlässigere Identifikation der Fehlerursache.

Gemäß einer weiteren Weiterbildung wird in Schritt d) für das wenigstens eine als fehlerhaft angenommene Element ein einmaliger Fehler, ein zeitweise auftretender Fehler und/oder ein dauerhafter Fehler angenommen.

Gemäß einer Weiterbildung der vorliegenden Erfindung wird in Unterschritt e1) aus dem wenigstens einen identifizierten fehlerhaften Element eine Ausfallswahrscheinlichkeit für das wenigstens eine identifizierte fehlerhafte Element und/oder für die automatisierte Anlage abgeleitet.

Es wird eine Wahrscheinlichkeit eines Ausfalls (z. B. auf Basis von historischen Ausfallhäufigkeiten, MTBF-Werten o.ä.) abgeleitet, welche für eine Priorisierung einer Simulation von Ausfallszenarien genutzt werden können.

Gemäß einer Weiterbildung der vorliegenden Erfindung umfasst das Ermitteln eines jüngsten fehlerfreien Anlagenzustands in Schritt b) die Unterschritte:
b1) Auswählen eines vorläufigen jüngsten fehlerfreien Anlagenzustands in den erfassten realen Anlagenzuständen.
b2) Vorläufiges Initialisieren des digitalen Zwillings mit dem ausgewählten vorläufigen fehlerfreien Anlagenzustand.
b3) Vorläufiges Simulieren des Anlagenzustands mittels des vorläufig initialisierten digitalen Zwillings bis zu dem ermittelten Fehlerzeitpunkt.
b4) Überprüfen, ob kein Fehler in dem vorläufig simulierten Anlagenzustand vorliegt, wobei die Unterschritte b1) bis b4) erneut ausgeführt werden, falls ein Fehler in dem vorläufig simulierten Anlagenzustand vorliegt. Dabei wird ein früherer realer Anlagenzustand aus den erfassten realen Anlagenzuständen als der zuvor vorläufig ausgewählte Anlagenzustand vorläufig ausgewählt.

Somit lässt sich besonders zuverlässig der zeitlich letzte (jüngste) reale Anlagenzustand in den erfassten realen Anlagenzuständen ermitteln und für die Initialisierung des digitalen Zwillings nutzen.

Die Erfindung sowie das technische Umfeld werden nachfolgend anhand der Figuren näher erläutert. Es wird darauf hingewiesen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere wird darauf hingewiesen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.
- Fig. 1: zeigt ein schematisches Flussdiagramm des Verfahrens zum Identifizieren von Fehlerursachen bei automatisierten Anlagen.
- Fig. 2: zeigt eine schematische Ansicht der automatisierten Anlage mit der Vorrichtung zum Identifizieren von Fehlerursachen bei automatisierten Anlagen.

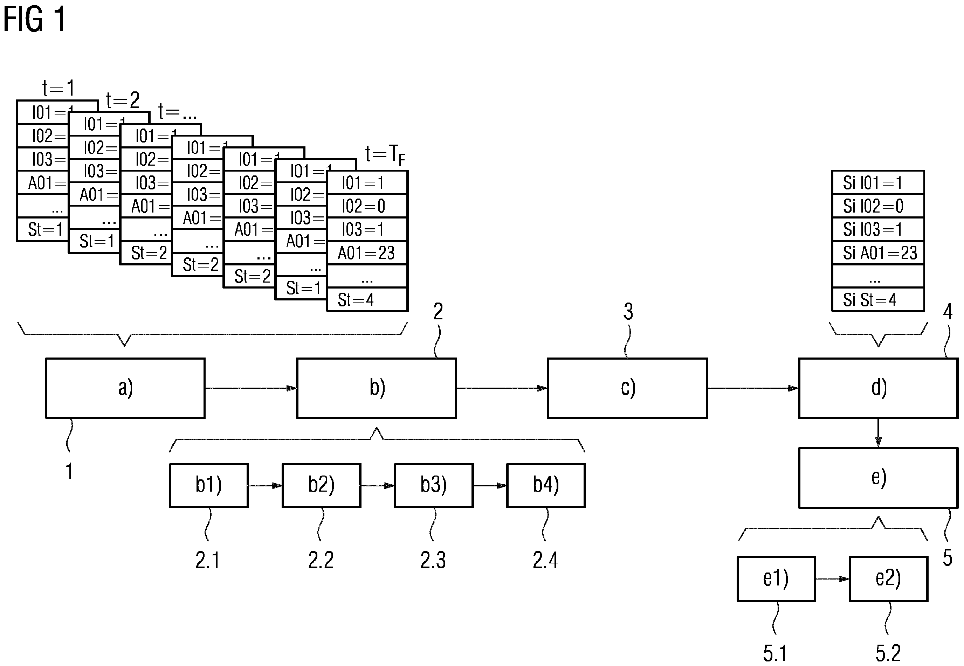

In Fig. 1 ist das Verfahren zum Identifizieren von Fehlerursachen bei automatisierten Anlagen schematisch dargestellt. Das Verfahren umfasst die Schritte a) kontinuierliches Erfassen 1 eines realen Anlagenzustands, b) kontinuierliches Überprüfen 2, c) Initialisieren 3 eines digitalen Zwillings, d) Simulieren 4 des Anlagenzustands und e) Vergleichen 5 des simulierten Anlagenzustands.

Im Schritt a) kontinuierliches Erfassen 1 des realen Anlagenzustands wird der reale Anlagenzustand St fortlaufend (jeweils nach Ablauf eines vorbestimmten Zeitintervalls) erfasst, also bestimmt und abgespeichert. Die erfassten Anlagenzustände St umfassen jeweils physikalische Größen I01...I03, A01, die von entsprechenden Sensoren in bzw. an einer automatisierten Anlage gemessen werden können.

Im Schritt b) kontinuierliches Überprüfen 2 werden die erfassten realen Anlagenzustände St dahingehend überprüft, ob ein Fehler in einem (dem neuesten) der erfassten realen Anlagenzustände St vorliegt. Ist dies der Fall, wird der Zeitpunkt, zu dem der erfasste reale Anlagenzustand umfassend den Fehler vorliegt, als Fehlerzeitpunkt T_{F} ermittelt (und zwischengespeichert). Ebenso wird ein jüngster (neuster) fehlerfreier Anlagenzustand in den erfassten realen Anlagenzuständen ermittelt (und zwischengespeichert).

Das Ermitteln eines jüngsten fehlerfreien Anlagenzustands in Schritt b) umfasst die Unterschritte b1) Auswählen 2.1 eines vorläufigen jüngsten fehlerfreien Anlagenzustands, b2) vorläufiges Initialisieren 2.2 des digitalen Zwillings, b3) vorläufiges Simulieren 2.3 des Anlagenzustands und b4) Überprüfen 2.4

Im Unterschritt b1) Auswählen 2.1 des vorläufigen jüngsten fehlerfreien Anlagenzustands wird der vorläufige jüngste (neuste) fehlerfreie Anlagenzustand aus den erfassten realen Anlagenzuständen St ausgewählt. Dieser vorläufige jüngste fehlerfreie Anlagenzustand wird im Unterschritt b2) vorläufiges Initialisieren 2.2 des digitalen Zwillings zum Initialisieren des digitalen Zwillings der automatisierten Anlage verwendet. Der digitale Zwilling ist danach in dem gleichen Anlagenzustand wie die reale Anlage zum neusten bzw. letzten Zeitpunkt, in dem noch kein Fehler in der realen automatisierten Anlage vorlag. Anschließend wird im Unterschritt b3) vorläufiges Simulieren 2.3 des Anlagenzustands der (virtuelle) Anlagenzustand mittels des initialisierten digitalen Zwillings bis zum Fehlerzeitpunkt T_{F}. Der vorläufige simulierte Anlagenzustand im Fehlerzeitpunkt T_{F} wird dahingehend im Schritt b4) Überprüfen 2.4 überprüft, ob kein Fehler in dem vorläufig simulierten Anlagenzustand vorliegt. Ist dies der Fall, so entspricht der vorläufige jüngste fehlerfreie Anlagenzustand tatsächlich dem jüngsten fehlerfreien Anlagenzustand und kann in Schritt c) verwendet werden. Die Unterschritte b1) bis b4) werden dagegen erneut ausgeführt, falls ein Fehler in dem vorläufig simulierten Anlagenzustand (im Fehlerzeitpunkt T_{F}) vorliegt, denn dann war die Fehlerursache bereits in dem vorläufig jüngsten fehlerfreien Anlagenzustand vorhanden. Es wird dementsprechend ein früherer realer Anlagenzustand aus den erfassten realen Anlagenzuständen als der zuvor vorläufig ausgewählte Anlagenzustand vorläufig ausgewählt.

Im Schritt c) Initialisieren 3 des digitalen Zwillings wird der digitale Zwilling nunmehr mit dem jüngsten (neusten) fehlerfreien Anlagenzustand initialisiert und somit in den gleichen Zustand wie die reale automatisierte Anlage vor Eintritt der Fehlerursache versetzt.

Im Schritt d) Simulieren 4 des Anlagenzustands wird dann vom Zeitpunkt des jüngsten fehlerfreien Anlagenzustands bis zum fehlerzeitpunkt mit dem initialisierten digitalen Zwilling simuliert und der simulierte Anlagenzustand im Fehlerzeitpunkt zwischengespeichert. Dabei wird jedoch vor der Simulation wenigstens ein Element des digitalen Zwillings als fehlerhaft angenommen. Es kann eine von mehreren vordefinierten Fehlerarten für das wenigstens eine Element angenommen werden.

Im Schritt e) Vergleichen 5 des simulierten Anlagenzustands wird der simulierte Anlagenzustand im Fehlerzeitpunkt mit dem realen Anlagenzustand im Fehlerzeitpunkt verglichen.

Der Schritt e) Vergleichen 5 des simulierten Anlagenzustands umfasst die Unterschritte e1) Identifizieren 5.1 wenigstens eines fehlerhaften Elements und e2) Wiederholen 5.2 der Schritte c) bis e).

Falls der simulierte Anlagenzustand im Fehlerzeitpunkt mit dem realen Anlagenzustand im Fehlerzeitpunkt übereinstimmt wird im Unterschritt e1) Identifizieren 5.1 wenigstens eines fehlerhaften Elements wenigstens ein fehlerhaftes Element der automatisierten Anlage als Fehlerursache in der automatisierten Anlage basierend auf dem wenigstens einen als fehlerhaft angenommenen Element des digitalen Zwillings identifiziert. Dabei kann auch aus dem wenigstens einen identifizierten fehlerhaften Element eine Ausfallswahrscheinlichkeit für das wenigstens eine identifizierte fehlerhafte Element und/oder für die automatisierte Anlage abgeleitet werden.

Im Unterschritt e2) Wiederholen 5.2 der Schritte c) bis e) werden die Schritte c) bis e) iterativ wiederholt, falls der simulierte Anlagenzustand im Fehlerzeitpunkt mit dem realen Anlagenzustand im Fehlerzeitpunkt nicht übereinstimmt. Dabei wird im Schritt d) wenigstens ein anderes Element des digitalen Zwillings als fehlerhaft angenommen und/oder eine andere Fehlerart für das gleiche Element wie zuvor angenommen.

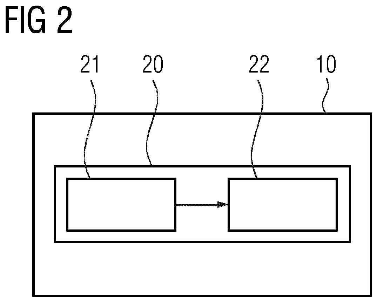

In Fig.2 ist die automatisierte Anlage 10 mit der Vorrichtung 20 zum Identifizieren von Fehlerursachen bei automatisierten Anlagen schematisch dargestellt. Die Vorrichtung 20 ist ausgebildet, das Verfahren aus Fig. 1 auszuführen. Dazu umfasst die Vorrichtung 20 wenigstens einen Sensor 21 und eine Steuereinheit 22.

Der wenigstens eine Sensor 21 erfasst kontinuierlich wenigstens eine physikalische Größe in bzw. an der automatisierten Anlage 10 (z. B. eine Temperatur, einen Druck und eine Geschwindigkeit eines Werkstücks in der automatisierten Anlage) .

Die Steuereinheit 22 ist mit dem wenigstens einen Sensor 21 kommunikativ verbunden, sodass der wenigstens eine Sensor 21 die erfasste wenigstens eine physikalische Größe an die Steuereinheit 22 übertragen kann. Die Steuereinheit 22 führt die Schritte a) bis e) des Verfahrens aus Fig. 1 aus.

Obwohl hier spezifische Ausführungsformen illustriert und beschrieben wurden, ist für den Fachmann ersichtlich, dass es eine Vielzahl von Alternativen und/oder gleichwertigen Implementierungen gibt. Es ist zu würdigen, dass die exemplarischen Ausgestaltungen oder Ausführungsformen nur Beispiele sind und nicht dazu gedacht sind, den Umfang, die Anwendbarkeit oder die Konfiguration in irgendeiner Weise einzuschränken. Vielmehr wird die vorstehende Zusammenfassung und detaillierte Beschreibung dem Fachmann hinreichende Anweisungen für die Umsetzung von mindestens einer bevorzugten Ausführungsform liefern, wobei es sich versteht, dass verschiedene Änderungen in der Funktion und Anordnung der Elemente, die in einer beispielhaften Ausgestaltung beschrieben werden, nicht von dem in den beigefügten Ansprüchen dargelegten Anwendungsbereich hinausführen. In der Regel ist diese Anmeldung dazu gedacht, alle Anpassungen oder Variationen der hier diskutierten spezifischen Ausführungsformen abzudecken.

In der vorstehenden ausführlichen Beschreibung wurden verschiedene Merkmale in einem oder mehreren Beispielen zusammengefasst, um die Offenbarung knapp zu halten. Es versteht sich, dass die obige Beschreibung illustrativ und nicht restriktiv sein soll. Sie soll alle Alternativen, Änderungen und äquivalente abdecken, die im Rahmen der Ansprüche enthalten sein.

Viele andere Beispiele werden einem Fachmann bei dem Studium der obigen Offenbarung offensichtlich werden. Um ein umfassendes Verständnis der Erfindung zu ermöglichen, wird eine spezifische Nomenklatur verwendet, die in der vorstehenden Offenbarung verwendet wurde. Es wird jedoch für einen Fachmann im Lichte der darin enthaltenen Spezifikation ersichtlich sein, dass die spezifischen Details nicht erforderlich sind, um die Erfindung anzuwenden. So werden die vorstehenden Beschreibungen spezieller Ausführungsformen der vorliegenden Erfindung zu Illustrations- und Beschreibungszwecken dargestellt. Sie sind nicht dazu gedacht, erschöpfend zu sein oder die Erfindung auf die oben offenbarten genauen Ausführungsformen zu beschränken; offensichtlich sind viele Modifikationen und Variationen im Hinblick auf die Ansprüche möglich. Die Ausführungsformen wurden ausgewählt und beschrieben, um die Grundsätze der Erfindung und ihre praktischen Anwendungen am besten zu erklären und um somit anderen Fachkräften die Möglichkeit zu geben, die Erfindung und verschiedene Ausführungsformen mit verschiedenen Modifikationen, sowie es für die jeweilige Verwendung geeignet erscheint, am besten anzuwenden. In der gesamten Spezifikation werden die Begriffe "einschließlich" und "in welchem/welcher" als Äquivalente der jeweiligen Begriffe "umfassend" bzw. "worin" verwendet. Darüber hinaus werden die Begriffe "erster/erste/erstes", "zweiter/zweite/zweites", "dritter, dritte, drittes" usw. lediglich als Bezeichnung verwendet und sind nicht dazu gedacht, numerische Anforderungen an die Objekte zu stellen oder eine bestimmte Rangfolge vorzugeben. Im Zusammenhang mit der vorliegenden Beschreibung und den Ansprüchen ist die Verbindung "oder" als Aufnahme ("und/oder") zu verstehen und nicht exklusiv ("entweder... oder").

## Patentansprüche

1. Verfahren zum Identifizieren von Fehlerursachen bei automatisierten Anlagen, umfassend die Schritte:
a) kontinuierliches Erfassen (1) eines realen Anlagenzustands einer automatisierten Anlage (10), wobei der reale Anlagenzustand wenigstens eine physikalische Größe der automatisierten Anlage umfasst;
**dadurch gekennzeichnet, dass** das Verfahren die folgenden Schritte umfasst:
b) kontinuierliches Überprüfen (2) ob ein Fehler in den erfassten realen Anlagenzuständen vorliegt und, falls ein Fehler in den erfassten realen Anlagenzuständen vorliegt, Ermitteln eines neusten fehlerfreien Anlagenzustands in den erfassten realen Anlagenzuständen und eines Fehlerzeitpunkts;
c) Initialisieren (3) eines digitalen Zwillings der automatisierten Anlage mit dem ermittelten neusten fehlerfreien Anlagenzustand;
d) Simulieren (4) des Anlagenzustands mittels des initialisierten digitalen Zwillings bis zu dem ermittelten Fehlerzeitpunkt, wobei wenigstens ein Element des digitalen Zwillings als fehlerhaft angenommen wird; und
e) Vergleichen (5) des simulierten Anlagenzustands im ermittelten Fehlerzeitpunkt mit dem realen Anlagenzustand im Fehlerzeitpunkt und
e1) Identifizieren (5.1) wenigstens eines fehlerhaften Elements der automatisierten Anlage als Fehlerursache in der automatisierten Anlage basierend auf dem wenigstens einen als fehlerhaft angenommenen Element des digitalen Zwillings, falls der simulierte Anlagenzustand im Fehlerzeitpunkt mit dem realen Anlagenzustand im Fehlerzeitpunkt übereinstimmt; oder
e2) Wiederholen (5.2) der Schritte c) bis e), falls der simulierte Anlagenzustand im Fehlerzeitpunkt mit dem realen Anlagenzustand im Fehlerzeitpunkt nicht übereinstimmt, wobei in Schritt d) wenigstens ein anderes Element des digitalen Zwillings als fehlerhaft angenommen wird.

2. Verfahren gemäß Anspruch 1, wobei in Schritt d) für das wenigstens eine als fehlerhaft angenommene Element eine Fehlerart aus einer Mehrzahl von verschiedenen Fehlerarten angenommen wird.

3. Verfahren gemäß Anspruch 2, wobei in Schritt d) für das wenigstens eine als fehlerhaft angenommene Element ein einmaliger Fehler, ein zeitweise auftretender Fehler und/oder ein dauerhafter Fehler angenommen wird.

4. Verfahren gemäß einem der vorherigen Ansprüche, wobei in Unterschritt e1) aus dem wenigstens einen identifizierten fehlerhaften Element eine Ausfallswahrscheinlichkeit für das wenigstens eine identifizierte fehlerhafte Element und/oder für die automatisierte Anlage abgeleitet wird.

5. Verfahren gemäß einem der vorherigen Ansprüche, wobei das Ermitteln eines neusten fehlerfreien Anlagenzustands in Schritt b) folgende Unterschritte umfasst:
b1) Auswählen (2.1) eines vorläufigen neusten fehlerfreien Anlagenzustands in den erfassten realen Anlagenzuständen;
b2) vorläufiges Initialisieren (2.2) des digitalen Zwillings mit dem ausgewählten vorläufigen fehlerfreien Anlagenzustand;
b3) vorläufiges Simulieren (2.3) des Anlagenzustands mittels des vorläufig initialisierten digitalen Zwillings bis zu dem ermittelten Fehlerzeitpunkt; und
b4) Überprüfen (2.4) ob kein Fehler in dem vorläufig simulierten Anlagenzustand vorliegt, wobei die Unterschritte b1) bis b4) erneut ausgeführt werden, falls ein Fehler in dem vorläufig simulierten Anlagenzustand vorliegt, wobei ein früherer realer Anlagenzustand aus den erfassten realen Anlagenzuständen als der zuvor vorläufig ausgewählte Anlagenzustand vorläufig ausgewählt wird.

6. Vorrichtung (20) zum Identifizieren von Fehlerursachen bei automatisierten Anlagen, umfassend:
- wenigstens einen Sensor (21), der ausgebildet ist, wenigstens eine physikalische Größe der automatisierten Anlage kontinuierlich zu erfassen; und
- eine Steuereinheit (22), die mit dem wenigstens einen Sensor (11) kommunikativ verbunden ist, **dadurch gekennzeichnet ist, dass** die Steuereinheit (22) ausgebildet ist, das Verfahren gemäß Anspruch 1 auszuführen, wobei die Steuereinheit (22) ausgestaltet und eingerichtet ist:
- einen realen Anlagenzustand einer automatisierten Anlage (10) kontinuierlich zu erfassen, wobei der reale Anlagenzustand die von dem wenigstens einen Sensor erfasste wenigstens eine physikalische Größe umfasst;
- kontinuierlich zu überprüfen, ob ein Fehler in den erfassten realen Anlagenzuständen vorliegt und, falls ein Fehler in den erfassten realen Anlagenzuständen vorliegt, einen neusten fehlerfreien Anlagenzustand in den erfassten realen Anlagenzuständen und einen Fehlerzeitpunkt zu ermitteln;
- einen digitalen Zwilling der automatisierten Anlage (10) mit dem ermittelten neusten fehlerfreien Anlagenzustand zu initialisieren;
- den Anlagenzustand mittels des initialisierten digitalen Zwillings bis zu dem ermittelten Fehlerzeitpunkt zu simulieren, wobei wenigstens ein Element des digitalen Zwillings als fehlerhaft angenommen wird; und
- den simulierten Anlagenzustand im ermittelten Fehlerzeitpunkt mit dem realen Anlagenzustand im Fehlerzeitpunkt zu vergleichen und:
- wenigstens ein fehlerhaftes Element der automatisierten Anlage (10) als Fehlerursache in der automatisierten Anlage basierend auf dem wenigstens einen als fehlerhaft angenommenen Element des digitalen Zwillings zu identifizieren, falls der simulierte Anlagenzustand im Fehlerzeitpunkt mit dem realen Anlagenzustand im Fehlerzeitpunkt übereinstimmt oder
- erneut den digitalen Zwilling zu initialisieren, den Anlagenzustand zu simulieren und den simulierten Anlagenzustand mit dem realen Anlagenzustand zu vergleichen, falls der simulierte Anlagenzustand im Fehlerzeitpunkt mit dem realen Anlagenzustand im Fehlerzeitpunkt nicht übereinstimmt, wobei wenigstens ein anderes Element des digitalen Zwillings als fehlerhaft angenommen wird.

7. Vorrichtung (20) gemäß Anspruch 6, wobei die Steuereinheit (22) ausgebildet ist, das Verfahren gemäß einem der Ansprüche 2 bis 5 auszuführen.

8. Automatisierte Anlage (10), umfassend die Vorrichtung (20) gemäß einem der Ansprüche 6 oder 7.

## Claims

1. Method for identifying causes of faults in automated installations, comprising the steps of:
a) continuously capturing (1) a real installation state of an automated installation (10), wherein the real installation state comprises at least one physical variable of the automated installation;
**characterized in that** the method comprises the following steps:
b) continuously checking (2) whether there is a fault in the captured real installation states and, if there is a fault in the captured real installation states, determining a latest fault-free installation state in the captured real installation states and determining a fault time;
c) initializing (3) a digital twin of the automated installation with the determined latest fault-free installation state;
d) simulating (4) the installation state by means of the initialized digital twin until the determined fault time, wherein at least one element of the digital twin is assumed to be faulty; and
e) comparing (5) the simulated installation state at the determined fault time with the real installation state at the fault time and
e1) identifying (5.1) at least one faulty element of the automated installation as the cause of the fault in the automated installation on the basis of the at least one element of the digital twin that is assumed to be faulty if the simulated installation state at the fault time matches the real installation state at the fault time; or
e2) repeating (5.2) steps c) to e) if the simulated installation state at the fault time does not match the real installation state at the fault time, wherein at least one other element of the digital twin is assumed to be faulty in step d).

2. Method according to Claim 1, wherein a type of fault from a plurality of different types of faults is assumed for the at least one element assumed to be faulty in step d).

3. Method according to Claim 2, wherein a one-off fault, a temporarily occurring fault and/or a permanent fault is/are assumed for the at least one element assumed to be faulty in step d).

4. Method according to one of the preceding claims, wherein a failure probability for the at least one identified faulty element and/or for the automated installation is derived from the at least one identified faulty element in substep e1).

5. Method according to one of the preceding claims, wherein the operation of determining a latest fault-free installation state in step b) comprises the following substeps:
b1) selecting (2.1) a provisional latest fault-free installation state in the captured real installation states;
b2) provisionally initializing (2.2) the digital twin with the selected provisional fault-free installation state;
b3) provisionally simulating (2.3) the installation state by means of the provisionally initialized digital twin until the determined fault time; and
b4) checking (2.4) whether there is no fault in the provisionally simulated installation state, wherein substeps b1) to b4) are carried out again if there is a fault in the provisionally simulated installation state, wherein an earlier real installation state is provisionally selected from the captured real installation states as the previously provisionally selected installation state.

6. Apparatus (20) for identifying causes of faults in automated installations, comprising:
- at least one sensor (21) which is designed to continuously capture at least one physical variable of the automated installation; and
- a control unit (22) which is communicatively connected to the at least one sensor (11), **characterized in that** the control unit (22) is designed to carry out the method according to Claim 1, wherein the control unit (22) is configured and set up:
- to continuously capture a real installation state of an automated installation (10), wherein the real installation state comprises the at least one physical variable captured by the at least one sensor;
- to continuously check whether there is a fault in the captured real installation states and, if there is a fault in the captured real installation states, to determine a latest fault-free installation state in the captured real installation states and to determine a fault time;
- to initialize a digital twin of the automated installation (10) with the determined latest fault-free installation state;
- to simulate the installation state by means of the initialized digital twin until the determined fault time, wherein at least one element of the digital twin is assumed to be faulty; and
- to compare the simulated installation state at the determined fault time with the real installation state at the fault time and:
- to identify at least one faulty element of the automated installation (10) as the cause of the fault in the automated installation on the basis of the at least one element of the digital twin that is assumed to be faulty if the simulated installation state at the fault time matches the real installation state at the fault time or
- to initialize the digital twin again, to simulate the installation state again and to compare the simulated installation state with the real installation state again if the simulated installation state at the fault time does not match the real installation state at the fault time, wherein at least one other element of the digital twin is assumed to be faulty.

7. Apparatus (20) according to Claim 6, wherein the control unit (22) is designed to carry out the method according to one of Claims 2 to 5.

8. Automated installation (10) comprising the apparatus (20) according to either of Claims 6 and 7.

## Revendications

1. Procédé d'identification de causes de défaut dans des installations automatisées, comprenant les stades :
a) détection (1) en continu d'un état réel d'une installation (10) automatisée, dans lequel l'état réel de l'installation comprend au moins un grandeur physique de l'installation automatisée ;
**caractérisé en ce que** le procédé comprend les stades suivants :
b) contrôle (2) en continu, s'il y a un défaut dans les états réels de l'installation qui sont détectés et, s'il y a un défaut dans les états réels de l'installation qui ont été détectés, détermination d'un état le plus nouveau sans défaut de l'installation parmi les états réels de l'installation qui ont été détectés et d'un instant du défaut ;
c) initialisation (3) d'un double numérique de l'installation automatisée par l'état le plus nouveau sans défaut de l'installation qui a été déterminé ;
d) simulation (4) de l'état de l'installation, au moyen du double numérique initialisé, jusqu'à l'instant déterminé du défaut, dans lequel on prend au moins un élément du double numérique comme défectueux ; et
e) comparaison (5) de l'état simulé de l'installation, à l'instant du défaut qui a été déterminé, à l'état réel de l'installation, à l'instant du défaut et
e1) identification (5.1) d'au moins un élément défectueux de l'installation automatisée comme cause du défaut dans l'installation automatisée, sur la base du au moins un élément pris comme défectueux du double numérique, si l'état simulé de l'installation à l'instant du défaut coïncide avec l'état réel de l'installation à l'instant du défaut ; ou
e2) répétition (5.2) des stades c) à e), si l'état simulé de l'installation à l'instant du défaut ne coïncide pas avec l'état réel de l'installation à l'instant du défaut, dans lequel, dans le stade d), on prend comme défectueux au moins un autre élément du double numérique.

2. Procédé suivant la revendication 1, dans lequel, dans le stade d), on prend, comme le au moins un élément pris comme défectueux, un type de défaut parmi une pluralité de types de défauts différents.

3. Procédé suivant la revendication 2, dans lequel, dans le stade d), on prend pour le au moins un élément pris comme défectueux, un défaut se produisant une seule fois, un défaut se produisant de temps en temps et/ou un défaut permanent.

4. Procédé suivant l'une des revendications précédentes, dans lequel, dans le sous-stade e1), on déduit, à partir du au moins un élément défectueux qui a été identifié, une probabilité de défaillance du au moins un élément défectueux qui a été identifié et/ou de l'installation automatisée.

5. Procédé suivant l'une des revendications précédentes, dans lequel la détermination d'un état sans défaut le plus nouveau de l'installation au stade b), comprend les sous-stades suivants :
b1) sélection (2.1) d'un état le plus nouveau sans défaut provisoire de l'installation, parmi les états réels de l'installation qui ont été détectés ;
b2) initialisation (2.2) provisoire du double numérique par l'état sans défaut provisoire de l'installation qui a été sélectionnée ;
b3) simulation (2.3) provisoire de l'état de l'installation au moyen du double numérique initialisé provisoirement, jusqu'à l'instant du défaut qui a été déterminé ; et
b4) contrôle (2.4) s'il n'y a pas de défaut de l'état de l'installation simulé provisoirement, dans lequel on effectue à nouveau les sous-stades b1) à b4) s'il y a un défaut dans l'état de l'installation simulé provisoirement, dans lequel on choisit provisoirement un état réel plus antérieur de l'installation, parmi les états réels de l'installation qui ont détectés, que l'état de l'installation sélectionné provisoirement auparavant.

6. Dispositif (20) d'identification de causes de défaut dans des installations automatisées, comprenant :
- au moins un capteur (21), qui est constitué pour détecter en continu au moins une grandeur physique de l'installation automatisée ; et
- une unité (22) de commande, qui est reliée en communication avec le au moins un capteur (11), **caractérisée en ce que** l'unité (22) de commande est constituée pour effectuer le procédé suivant la revendication 1, dans lequel l'unité (22) de commande est conformée et agencée
- pour détecter en continu un état réel d'une installation (10) automatisée, dans lequel l'état réel de l'installation comprend au moins un grandeur physique de l'installation automatisée ;
- pour contrôler en continu, s'il y a un défaut dans les états réels de l'installation qui sont détectés et, s'il y a un défaut dans les états réels de l'installation qui ont été détectés, déterminer un état le plus nouveau sans défaut de l'installation parmi les états réels de l'installation qui ont été détectés et un instant du défaut ;
- pour initialiser un double numérique de l'installation (10) automatisée par l'état le plus nouveau sans défaut de l'installation, qui a été déterminé ;
- pour simuler l'état de l'installation, au moyen du double numérique initialisé, jusqu'à l'instant déterminé du défaut, dans lequel on prend au moins un élément du double numérique comme défectueux ; et :
- pour comparer l'état simulé de l'installation, à l'instant du défaut qui a été déterminé, à l'état réel de l'installation, à l'instant du défaut et
- identifier au moins un élément défectueux de l'installation (10) automatisée comme cause du défaut dans l'installation automatisée, sur la base du au moins un élément pris comme défectueux du double numérique, si l'état simulé de l'installation à l'instant du défaut coïncide avec l'état réel de l'installation à l'instant du défaut ; ou
- pour initialiser à nouveau le double numérique, pour simuler l'état de l'installation et pour comparer l'état simulé de l'installation à l'état réel de l'installation, si l'état simulé de l'installation à l'instant du défaut ne coïncide pas avec l'installation à l'instant du défaut, dans lequel au moins un autre élément du double numérique est pris comme défectueux.

7. Dispositif (20) suivant la revendication 6, dans lequel l'unité (22) de commande est constituée pour effectuer le procédé suivant l'une des revendications 2 à 5.

8. Installation (10) automatisée comprenant le dispositif (20) suivant l'une des revendications 6 ou 7.
